# EUROPÄISCHE PATENTSCHRIFT

(11) **EP 0 532 730 B1**
(45) Veröffentlichungstag und Bekanntmachung des Hinweises auf die Patenterteilung: **04.06.1997**
(21) Anmeldenummer: 92908431.7
(22) Anmeldetag: 27.03.1992
(51) Int. Cl.: B01D 53/86

(54) **REGENERATIV-WÄRMETAUSCHER**
REGENERATIVE HEAT-EXCHANGER
ECHANGEUR DE CHALEUR A REGENERATION

(30) Priorität: 28.03.1991 DE 4110330
(43) Veröffentlichungstag der Anmeldung: 24.03.1993
(73) Patentinhaber: Apparatebau Rothemühle Brandt & Kritzler Gesellschaft mit beschränkter Haftung, 57482 Wenden-Rothemühle (DE)
(72) Erfinder: KRITZLER, Gerhard, D-5905 Freudenberg (DE); SCHLÜTER, Siegfried, D-5963 Wenden-Rothemühle (DE)
(74) Vertreter: Müller, Gerd, Dipl.-Ing.
(86) Internationale Anmeldenummer: EP9200685
(87) Internationale Veröffentlichungsnummer: WO9217267

(56) Entgegenhaltungen:
- WO-A-85/03645
- WO-A-89/07975
- DE-A- 4 110 333

## Beschreibung

Die Erfindung betrifft eine Vorrichtung bei einem kreisförmigen Regenerativ-Wärmetauscher zur NOₓ-Minderung von schadstoffhaltigen, sich mit einem anderen Medium (Luft) im Wärmetausch befindenden Abgasen durch Zugabe von NH₃, mit feststehenden oder umlaufenden, zumindest teilweise aus katalytischem Material bestehenden Speichermassen, denen feststehende oder drehende Hauben zugeordnet sind und die gegeneinander abgedichtete Luft- und Gasbereiche aufweisen, wobei das Reduktionsmittel NH₃ dem Katalysator von der Rein- und/oder Rohgasseite her zugeführt wird. Ein Regenerativ-Wärmetauscher dieser Art ist durch die WO-A-850645 bekanntgeworden. Er läßt sich hierbei sowohl für Luftvorwärmer (Luvos) als auch für Gasvorwärmer (Gavos) einsetzen.

Bei Kraftwerks- und Industriefeuerungsanlagen werden die Abgase in einem Regenerativ-Wärmetauscher zur Vorwärmung der Verbrennungsluft genutzt. Bei diesem Prozeß können bspw. die im Abgas enthaltenen Stickoxide (NOx) weitgehend reduziert werden, indem in diesem Fall die Speichermassen - die feststehend oder umlaufend ausgebildet sein können - des Regenerativ-Luftvorwärmers ganz oder teilweise als katalytisch wirksam ausgeführt sind und bspw. vor allem Ammoniak (NH₃) als Reduktionsmittel zugegeben wird. Somit geht es um die katalytische Stickoxidminderung, bei der die Reduktion (Desoxidation) der Stickoxide durch Zugabe des NH₃ in Anwesenheit eines in einem Regenerativ-Luftvorwärmer bzw. Regenerativ-Wärmetauscher integrierten Katalysators stattfindet. In der Regel ist das NOx-haltige Abgas das Rauchgas einer Feuerung, das am Ende eines Dampferzeugers zur Vorwärmung der Verbrennungsluft den Regenerativ-Wärmetauscher durchströmt.

Zu diesem Zweck ist es bekannt, zur selektiven Reduktion von Stickoxiden in den Abgasen von Feuerungslagen das NH₃ dampfförmig, in Mischung mit Luft als Trägergas unter Druck oder in Wasser gelöst drucklos in die aus der Feuerungsanlage austretenden Abgase einzuleiten. Durch Mischstrecken mit entsprechenden Einbauten innerhalb der weiterführenden Abgaskanäle, wie z. B. durch die WO-A-8907975 bekanntgeworden, wird versucht, im Abgasstrom bis zum Eintritt in den Katalysator eine strähnenfreie Ammoniak- und Temperaturverteilung zu erhalten.

Der Katalysator bzw. die Speichermassen sind unter Berücksichtigung optimaler Reaktionstemperaturen innerhalb der Abgasführung dem umlaufenden Regenerativ-Wärmetauscher zur Übertragung der Abgaswärme an die der Feuerung zuzuführende Verbrennungsluft vorgeschaltet. Als Katalysatoren haben sich insbesondere Festbett-Katalysatoren mit vertikal nach unten gerichteter Abgasströmung bewährt, von denen mehrere von den zu entstickenden Abgasen im Wechsel beaufschlagt werden. Die in Wabenstruktur ausgeführten Festbett-Katalysatoren enthalten als katalytisch wirkende Stoffe Vanadiumverbindungen, die die Umsetzung der Stickoxide mit dem zuvor in den Abgasstrom eingeleiteten und auf dem Weg bis zum Katalysator unter feiner Aufteilung eingemischten NH₃ begünstigen. Die Reaktion mit den in den Abgasen enthaltenen Stickoxiden führt im wesentlichen zu molekularen Stickstoff und Wasser als Reaktionsprodukte, die sich dann unschädlich in die Umgebung ableiten lassen.

Durch die EP-A-0 195 075 und 0 257 024 ist es bekanntgeworden, das Reduktionsmittel auf der Roh-, Rauch- oder Abgasseite bzw. auf der Reingas- oder Luftseite oder auch sowohl auf der Gas- als auch auf der Luftseite zuzugeben. Das NH₃ wird somit entweder dem Rauchgas vor dessen Eingang in den Katalysator oder der zu erwärmenden Frischluft vor deren Eintritt in den Katalysator bzw. in Kombination beiden Seiten zugemischt. Auf jeden Fall werden die im Rauchgas enthaltenen Stoffkomponenten, nämlich NOx, in unschädliche Komponenten katalytisch umgesetzt.

Bei der rauchgasseitigen Zugabe haben im Katalysator das NH₃ und die störenden Schadstoffkomponenten NOx eine zu geringe Verweilzeit, so daß hier nur eine unzureichende Reaktion stattfindet. Nicht verbrauchtes NH₃ wird daher auf die Seite des gereinigten Rauchgases weitergeleitet, die zum Kamin führt, so daß ein unerwünschter Schlupf von unverbrauchtem Reaktionsmittel durch die Abgabe über den Kamin die Umwelt belastet. Auch bei der luftseitigen Zugabe von NH₃ tritt in der Regel eine Leckage auf, und trotz vorhandener Dichtungen gelangt von der Seite des Reingases ein gewisser Anteil des NH₃ auf die Seite des gereinigten Rauchgases. Dieser Anteil geht somit verloren und belastet die nachgeschalteten Anlagenteile.

Der Erfindung liegt die Aufgabe zugrunde, die genannten Nachteile zu vermeiden und im Sinne einer maximalen NOx-Minderung einerseits einen hohen Reaktionsgrad zu erreichen, andererseits aber die Dosierung mit dem Reduktionsmittel so vorzunehmen, daß mit dem gereinigten Abgas allenfalls ein minimaler Schlupf des Reduktionsmittels in die Umwelt gelangt.

Diese Aufgabe wird erfindungsgemäß dadurch gelöst, daß die Reduktionsmittel-Zuführung aus einer festen, von beweglichen und/oder schwenkbaren Leitelementen gebildeten Begrenzung besteht, der mindestens eine schwenk- und einstellbare Düse/ein Düsensystem zugeordnet ist. Mittels der Leitelemente, die sich vorteilhaft als Leitbleche bzw. -wände ausbilden und bis dicht an die Speichermassen heranführen lassen, läßt sich die Ammoniak-Zugabe unter Beachtung der bei Regenerativ-Wärmetauschern gegebenen Kreissektor-Geometrie im Sinne einer gleichmäßigen Beaufschlagung des Katalysators optimieren. Es wird nämlich das NH₃ von den den Speichermassen von der Luftseite her in der drehenden Haube vorgeschalteten Leitblechen geführt und ganz gezielt in die Speichermassen bzw. den Katalysator eingeleitet.

Die Reduktionsmittelzuführung kann aus mindestens einer Düse bestehen, mit der sich bei der luftseitigen Eindüsung das NH₃ mit einem Trägergas, das in der Regel ebenfalls Luft ist, dem Wärmetauscher zuführen und dem kalten Verbrennungsluftstrom vor Eintritt in die Speichermassen beimischen läßt. Wenn die Düse dabei als Schlitzdüse mit einem der Kreissektor-Kontur ähnlichen Öffnungsquerschnitt ausgebildet ist, läßt sich das gezielte und gerichtete Einleiten von NH₃ unterstützen.

Nach einem weiteren Vorschlag läßt sich das NH₃ mittels eines aus mehreren einzelnen Rund- oder Fächerdüsen bestehenden Düsensystems einführen, was es erlaubt, das Einleiten des NH₃ variabel zu gestalten, insbesondere hinsichtlich der Dosierung. Beim Betrieb von Luftvorwärmern und Wärmetauschern ist eine gut geregelte NH₃ Dosierung wichtig, um zu vermeiden, daß sich Ammonium-Hydrogen-Sulfat (NH₄HS₄) aus SO₃ und NH₃ bildet. Das setzt voraus, für das NOx-haltige Abgas eineausreichende Katalysatoroberfläche, die richtige Reaktionstemperatur und eine entsprechende NH₃-Menge vorzusehen, was sich mit den erfindungsgemäßen Leitelementen erreichen läßt, die das NH₃ gezielt an den gewünschten Ort des Geschehens, den Speichermassen zuleiten. Die Rund- oder Fächerdüsen stellen im übrigen handelsübliche Düsenarten dar.

Wenn die Leitelemente in der Haube so angeordnet sind, daß sie außen von reduktionsmittelfreier Luft als Sperrmedium umschlossen und vorteilhaft am Ende der regenerativen Abkühlphase liegend angeordnet sind, läßt sich einerseits erreichen, daß mit dem bei Regenerativ-Wärmetauschern typischen Kammeraustausch und über die Dichtspalte zwischen der Luft und dem Rauchgas kein NH₃ in das gereinigte Abgas übertragen werden kann. Andererseits begünstigt die am Ende der regenerativen Abkühlphase herrschende niedrige Temperatur die Adsorptionsfähigkeit des Katalysators über das NH₃. Die in der Luftsektorfläche angeordneten Leitelemente bzw. -bleche bilden erfindungsgemäß für die NH₃-Zufuhr die eigentliche Mischzone; sie nehmen etwa 1/2 bis 2/3 des Anteils der Luftsektorfläche ein. Hierbei empfiehlt es sich, daß jeweils eine Düse bzw. ein Düsensystem zwischen zwei Leitelementen angeordnet ist.

Nach einem Vorschlag der Erfindung läßt sich die Düse bzw. das Düsensystem in einem separaten, vorzugsweise als umfangsgeschlossene Kammer ausgebildeten und innerhalb des Luftbereichs liegenden Sektor anordnen. Das NH₃-Trägermediumgemisch wird somit getrennt von den wärmetauschenden Medien zugeführt. Für die NH₃-Zufuhr enthält der Sektor das gleiche Düsensystem, wie es auch zwischen den zuvor beschriebenen Leitelementen zum Einsatz kommt. Als gegenüber der Luft abgeschlossene Kammer nimmt der Sektor weniger als 20 % des Luftquerschnittes ein und erlaubt es, dem Katalysator das NH₃-Trägerluftgemisch mit sehr hohen NH₃-Konzentrationen zuzuführen. Da der Sektor innerhalb des Luftbereichs angeordnet ist, lassen sich auch in diesem Falle die Vorteile der tiefen Temperaturen für die Adsorption, und die ihn von außen umschließende, von Reduktionsmittel freie Luft zur Leckageminderung nutzen.

Wenn ein separater, umfangsgeschlossener Sektor weiterhin an der Luftaustrittsseite der Speichermassen angeordnet ist, läßt sich dieser dazu ausnutzen, einen möglichen NH₃-Überschuß getrennt von den wärmetauschenden Medien auf zunehmen und wieder zur Eingabestelle zurückzuführen, so daß sich für das NH₃ ein regelbarer Dosierkreislauf erreichen läßt.

Nach weiteren Vorschlägen der Erfindung lassen sich das Düsensystem bzw. die Düse schwenkbar und/oder drehbar anordnen und außerdem so einstellen, daß sich der Abstand zu den Speichermassen verändern läßt. Diese Maßnahmen tragen zu einer optimalen NH₃-Zufuhr und -beimischung zur einströmenden Luft bei.

Es wird vorgeschlagen, daß die Leitelemente insgesamt schwenkbar und/oder einzeln winkelverstellbar sind. Das ermöglicht es, einerseits die günstigste Temperaturzone einzustellen und andererseits mit der variabel zu verändernden Sektorgröße die nötige Verweilzeit für die NH₃-Adsorption der Katalysatoren bzw. Speichermassen vorzugeben.

Im Sinne der optimalen NH₃-Zufuhr und -beimischung empfiehlt es sich, daß auch der Sektor schwenkbar angeordnet ist und somit variable Einstellungen und Lageveränderungen innerhalb des Luftbereichs erlaubt.

In weiterer Ausgestaltung der separaten NH₃-Einleitung wird vorgeschlagen, daß der Reduktionsmittelzuführung an der Lufteintritts- und Luftaustrittsseite der Speichermassen zugeordnete Dichtleisten gegeneinander versetzt sind. Es läßt sich damit erreichen, daß ein am Wärmetauscher- bzw. Katalysatoraustritt verbleibender NH₃-Überschuß nicht mit der Verbrennungsluft abströmt, sondern auf die Gasseite vor den Eintritt zum Katalysator gelangt, so daß sich dieser Überschuß noch einmal zur Reaktion bringen läßt. Alternativ ließe sich das auch über einen an der Luftaustrittsseite zur Gasseite führenden Leitkanal erreichen.

Die Erfindung wird nachfolgend anhand von in den Zeichnungen dargestellten Ausführungsbeispielen des näheren erläutert. Es zeigen:
- Figur 1: einen erfindungsgemäßen Regenerativ-Wärmetauscher mit in der dem Katalysator von der Lufteintrittsseite her vorgeschalteten, umlaufenden Haube angeordneten Leitblechen und zwischen den Leitblechen liegenden Zuführdüsen für NH₃, schematisch dargestellt;
- Figur 2: den Regenerativ-Wärmetauscher gemaß Figur 1 entlang der Linie II-II geschnitten, schematisch dargestellt;
- Figur 3: einen mit der Ansicht gemäß Figur 2 vergleichbaren Schnitt durch eine Haube eines Regenerativ-Wärmetauschers mit in den Luftbereichen angeordneten separaten Sektoren zur NH₃-Zuführung mittels in den Sektoren angeordneten Reduktionsmittel-Zuführungen in Form von Düsen, schematisch dargestellt;
- Figur 4: im Querschnitt den Katalysator eines Regenerativ-Wärmetauschers gemäß Figur 1 mit versetzten Dichtleisten, schematisch dargestellt;
- Figur 5: im Querschnitt den Katalysator eines Regenerativ-Wärmetauschers gemäß Figur 1 mit einem von der Luftaustrittsseite zur Gasseite führenden Leitkanal; und
- Figur 6: einen Querschnitt des erfindungsgemäßen, mit separaten Sektoren zur Einleitung des Reduktionsmittels versehenen Regenerativ-Wärmetauschers, in der Lufteintrittsebene vom Luftzustrom aus gesehen.

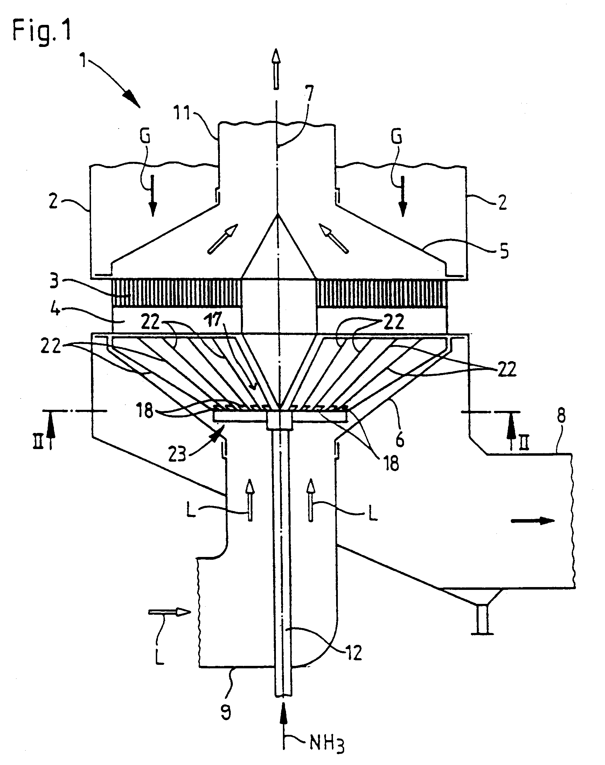

Dem in Figur 1 gezeigten, als Luftvorwärmer ausgebildeten Regenerativ-Wärmetauscher 1 strömt NOx-haltiges, heißes Abgas von einem nicht dargestellten Dampferzeuger über einen Kanal 2 zu. Das heiße Rohgas G - im folgenden kurz Gas genannt - strömt somit von oben in den Regenerativ-Wärmetauscher 1 ein, der in seinem mittleren Teil einen aus feststehenden Speichermassen 3 bestehenden Katalysator und einen ihnen nachgeschalteten Wärmespeicher 4 aufweist, Beidseitig der Speichermassen 3 bzw. des Wärmespeichers 4 befindet sich jeweils eine segmentierte Haube 5, 6, die sich gemeinsam um eine senkrechte Achse 7 drehen. Die Hauben 5, 6 können sich schrittweise oder kontinuierlich drehen, wobei aufgrund der Drehbewegung immer andere Teile der Speichermassen 3 dem schadstoffbelasteten, heißen Gas G ausgesetzt sind. Auf dem Weg des Gases G durch die katalytisch wirksamen Speichermassen wird durch Adsorption von NH₃ eine NOx-Reduktion bewirkt. Gleichzeitig heizen sich die Speichermassen 3 durch das Gas G auf, das sich dabei abkühlt und den Regenerativ-Wärmetauscher 1 am unteren Ende in gereinigter Form über den Kanal 8 verläßt.

Vom unteren Ende des Regenerativ-Wärmetauschers 1 her ist an die Haube 6 eine Leitung 9 angeschlossen, über die saubere, kalte Verbrennungsluft L - nachfolgend kurz als Luft bezeichnet - im Gegenstrom zu dem Gas G über die sich drehende Haube 6 den von dem Gas G aufgeheizten Speichermassen 3 zugeführt wird. Die Luft L kühlt die Speichermassen 3 unter Wärmeaufnahme ab und strömt über die deckungsgleich mit der Haube 6 umlaufende obere Haube 5 als Heißluft durch einen Kanal 11 zur Feuerung.

Damit sich die NOx-Reduktion erreichen läßt, wird als Reduktionsmittel NH₃ mit vorgewärmter Trägerluft über ein Zuführrohr 12 in die untere Haube 6 eingeleitet und von dort zu den Speichermassen 3 geführt. Das NH₃ verteilt sich gemäß der die Haube 6 vom Lufteintritt her zeigenden Figur 6 über einen Ringkanal 13 in separate, umfangsgeschlossene, innerhalb des Luftbereichs 15 angeordnete Sektoren 14, die das NH₃ in den zwischen den Flügeln der beiden sich drehenden Hauben 5, 6 verbleibenden Strömungsquerschnitts des Abgases in die katalytisch wirksamen Speichermassen 3 einleiten. Die Sektoren 14 liegen sich diametral gegenüber und befinden sich von der Drehrichtung 16 her gesehen vorzugsweise jeweils im Nachlauf zum Haubenflügel. An dieser Stelle haben die Speichermassen 3 die niedrigste Temperatur erreicht und begünstigen damit die NH₃- Adsorption.

Zur Vermeidung eines NH₃-Übertritts in den Abgasstrom sind nicht dargestellte, radial verlaufende Dichtungen der Sektoren 14 bspw. labyrinthartig gestaltet und können gegebenenfalls mit einem Sperrgas und/oder einem Spülgas beaufschlagt werden, das aus den entsprechenden Katalysator- bzw. Speichermassensektoren nach der NH₃-Beaufschlagung das überschüssige NH₃ vor dem Eintritt in die Abgaszone in den Heißluftstrom austrägt.

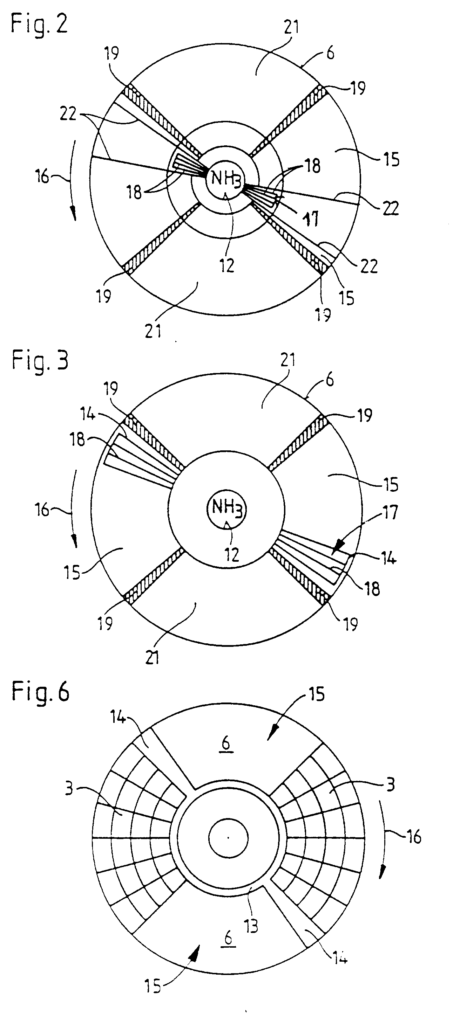

Bei der Ausführung nach Figur 3 ist in den Sektoren 14 eine Reduktionsmittel-Zuführung 17 in Form von Schlitzdüsen 18 angeordnet, die es erlauben, das zugeführte NH₃ zielgerichtet, an gewünschter Stelle in die Speichermassen 3 (vgl. Figur 1) des Regenerativ-Wärmetauschers 1 einzuleiten. Die Sektoren 14 mit den die Schlitzdüsen 18 aufnehmenden Luftbereichen 15 sind mittels Dichtungen 19 von den Gasbereichen 21 getrennt. Die Sektoren 14 sind zusammen mit den Schlitzdüsen 18 schwenkbeweglich in den Luftbereichen 15 angeordnet, wo sie etwa 20 % des Luftquerschnitts einnehmen.

Die Ausführung nach Figur 2 unterscheidet sich von der NH₃-Zuführung über Sektoren 14 und Schlitzdüsen 18 gemäß Figur 3 dadurch, daß keine separaten, aus miteinander verbundenen Wänden bestehenden Sektoren 14 vorhanden sind, sondern vielmehr variabel verstellbare, d. h., drehbar sowie schwenkbar und im Abstand zu den Speichermassen 3 einstellbare Leitelemente bzw. -bleche oder - wände 22 jeweils im Luftbereich 15 der unteren Haube 6 des Regenerativ-Wärmetauschers 1 angeordnet sind, wie auch in Figur 1 dargestellt wird. Zwischen den Leitblechen 22 sind Düsensysteme 23 eingeschlossen, die - wie bei der Ausführung nach Figur 3 - aus Schlitzdüsen 18 oder mehreren einzelnen Rund- oder Fächerdüsen (nicht dargestellt) bestehen können.

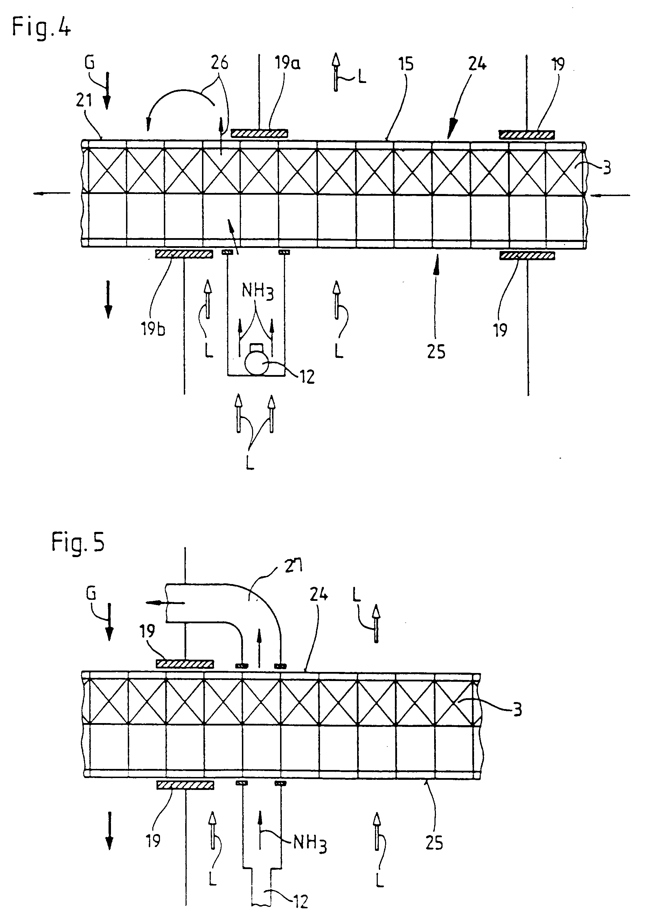

Damit sich in weiterer Ausgestaltung der separaten NH₃-Zufuhr, d.h. über die Sektoren bzw. Leitflächen verhindern läßt, daß ein am Austritt der Speichermassen 3 verbleibender NH₃-Überschuß mit der Luft L abströmt, ist gemäß Figur 4 die an der Luftaustrittsseite 24 angeordnete, den Luftbereich 15 von dem Gasbereich 21 trennende Dichtung 19a gegenüber der Dichtung 19b an der Lufteintrittsseite 25 versetzt angeordnet. Der NH₃-Überschuß gelangt damit gemäß den Pfeilen 26 auf die Gasseite bzw. den Gasbereich 21 vor den Eintritt zu den Speichermassen 23 und läßt sich damit noch einmal zur Reaktion bringen. Zur Lösung desselben Problems führt bei der Variante nach Figur 5 ein Leitkanal 27 von der Luftaustrittsseite 24 zum Gasbereich 21.

Somit läßt sich mit den erfindungsgemäßen Maßnahmen bei einem Regenerativ-Wärmetauscher 1 mit katalytischer Stickoxidminderung die Verbrennungsluft vor dem Eintritt in den Wärmetauscher von NH₃ freihalten und die Gefahr eines mit der Luft-Leckage einhergehenden NH₃-Übertritts in das Abgas vermeiden. Durch die Verstell- bzw. Einstellbarkeit der Sektoren bzw. Leitbleche und der Düsensysteme bzw. Düsen läßt sich eine optimale Aufladung der Speichermassen 3 erreichen. Die Zugabeeinrichtungen für das NH₃ sind nämlich so ausgebildet, daß die in dem ringförmig ausgebildeten Gehäuse des Regenerativ-Wärmetauschers installierten Speichermassen 3 bzw. Katalysator-Elemente den Querschnitts- und Oberflächenverhältnissen entsprechend gleichmäßig beaufschlagt und die Speicherfähigkeit der Speichermassen mit einer angemessenen Konzentration des NH₃-Luftgemisches und einer ausreichenden Verweilzeit aufgeladen werden. Die Düsen bzw. das Düsensystem sind so bestückt bzw. ausgebildet, daß die NH₃-Zugabe den durch die Ringbauweise gegebenen Flächenverhältnissen entspricht. Die Sektoren bzw. Leitbleche sind so angeordnet, daß sie rundum durch NH₃-freie Luft eingeschlossen sind, so daß sich unerwünschte NH₃-Verluste zum Abgas durch Spalt-Leckagen vermeiden lassen.

## Patentansprüche

1. Vorrichtung bei einem kreisförmigen Regenerativ-Wärmetauscher (1) zur NOₓ-Minderung von schadstoffhaltigen, sich mit einem anderen Medium (Luft) im Wärmetausch befindenden Abgasen durch Zugabe von NH₃, mit feststehenden oder umlaufenden, zumindest teilweise aus katalytischem Material bestehenden Speichermassen (3), denen feststehende oder drehende Hauben (5, 6) zugeordnet sind, und die gegeneinander abgedichtete Luft- und Gasbereiche (15, 21) aufweisen
**dadurch gekennzeichnet,**
daß das Reduktionsmittel NH₃ dem Katalysator von der Rein- und/oder Rohgasseite her zugeführt wird, und daß die Reduktionsmittel-Zuführung (17) aus einer festen, von beweglichen und/oder schwenkbaren Leitelementen (14; 22), die bis dicht an die Speichermassen (3) heranreichen, gebildeten Begrenzung besteht, der mindestens eine schwenk- und einstellbare Düse (18) bzw. Düsensystem (23) zugeordnet ist.

2. Regenerativ-Wärmetauscher nach Anspruch 1,
**dadurch gekennzeichnet,**
daß als Leitelemente ausgebildete Leitbleche (22) bis direkt an die Speichermassen (3) heranreichen.

3. Regenerativ-Wärmetauscher nach Anspruch 2,
**dadurch gekennzeichnet,**
daß die Düse (18) als Schlitzdüse mit einem der Kreissektor-Kontur ähnlichen Öffnungsquerschnitt ausgebildet ist.

4. Regenerativ-Wärmetauscher nach Anspruch 2,
**gekennzeichnet durch**
ein aus mehreren einzelnen Rund- oder Fächerdüsen bestehendes Düsensystem (23).

5. Regenerativ-Wärmetauscher nach einem oder mehreren der Ansprüche 1 bis 4,
**gekennzeichnet durch**
so angeordnete Leitelemente (14; 22), daß sie außen von reduktionsmittelfreier Luft (L) als Sperrmedium umschlossen sind.

6. Regenerativ-Wärmetauscher nach einem oder mehreren der Ansprüche 1 bis 5,
**dadurch gekennzeichnet,**
daß die Leitelemente (14; 22) am Ende der regenerativen Kühlphase angeordnet sind.

7. Regenerativ-Wärmetauscher nach einem oder mehreren der Ansprüche 1 bis 6,
**dadurch gekennzeichnet,**
daß jeweils eine Düse (18) bzw. ein Düsensystem (23) zwischen zwei Leitelementen (22) angeordnet ist.

8. Regenerativ-Wärmetauscher nach einem oder mehreren der Ansprüche 1 bis 7,
**dadurch gekennzeichnet,**
daß die Düse (18) bzw. das Düsensystem (23) in einem separaten Sektor (14) angeordnet ist.

9. Regenerativ-Wärmetauscher nach Anspruch 8,
**dadurch gekennzeichnet,**
daß der Sektor (14) als umfangsgeschlossene Kammer ausgebildet und innerhalb des Luftbereichs (15) angeordnet ist.

10. Regenerativ-Wärmetauscher nach einem oder mehreren der Ansprüche 1 bis 9,
**dadurch gekennzeichnet,**
daß ein separater, umfangsgeschlossener Sektor an der Luftaustrittsseite (24) der Speichermassen (3) angeordnet ist.

11. Regenerativ-Wärmetauscher nach einem oder mehreren der Ansprüche 1 bis 10,
**dadurch gekennzeichnet,**
daß der Abstand des Düsensystems (23) bzw. der Düse (18) zu den Speichermassen (3) einstellbar ist.

12. Regenerativ-Wärmetauscher nach Anspruch 9 oder 10,
**dadurch gekennzeichnet,**
daß der Sektor (14) schwenkbar angeordnet ist.

13. Regenerativ-Wärmetauscher nach einem oder mehreren der Ansprüche 1 bis 12,
**dadurch gekennzeichnet,**
daß der Reduktionsmittel-Zuführung (17) an der Lufteintritts- und Luftaustrittsseite (25 bzw. 24) der Speichermassen (3) zugeordnete Dichtungen (19a, 19b) gegeneinander versetzt sind.

14. Regenerativ-Wärmetauscher nach einem oder mehreren der Ansprüche 1 bis 13,
**gekennzeichnet durch**
einen an der Luftaustrittsseite (24) der Speichermassen (3) angeordneten, vom Luftbereich (15) zum Gasbereich (21) führenden Leitkanal (27).

## Claims

1. Device with a circularly regenerative heat exchanger (1) for NOₓ reduction of waste gases, which have a noxious substance content and are disposed in heat exchange with another medium (air), by addition of NH₃, with fixed or circulating storage masses which consist at least partly of catalytic material, are associated with fixed or rotating hoods (5, 6) and have air and gas regions (15, 21) sealed off relative to one another, characterised thereby that the reduction means NH₃ is fed to the catalyser of the pure gas side and that the reduction means feed (17) consists of a solid boundary which is formed by movable and/or pivotable guide elements (14; 22), which extend closely up to the storage masses (3), and is associated with at least one pivotable and settable nozzle (18) or nozzle system (23).

2. Regenerative heat exchanger according to claim 1, characterised thereby that guide sheet metal plates (22) constructed as guide elements extend directly up to the storage masses (3).

3. Regenerative heat exchanger according to claim 2, characterised thereby that the nozzle (18) is constructed as a slot nozzle with an opening cross-section similar to the contour of a sector of a circle.

4. Regeneration heat exchanger according to claim 2, characterised by a nozzle system (23) consisting of several individual round nozzles or fan-shaped nozzles.

5. Regenerative heat exchanger according to one or more of claims 1 to 4, characterised by guide elements (14; 22) so arranged that they are outwardly surrounded by air (L), which is free of reduction means, as blocking medium.

6. Regenerative heat exchanger according to one or more of claims 1 to 5, characterised thereby that the guide elements (14; 22) are arranged at the end of the regenerated cooling phase.

7. Regenerative heat exchanger according to one or more of claims 1 to 6, characterised thereby that a respective nozzle (18) or nozzle system (23) is arranged between two guide elements (22).

8. Regenerative heat exchanger according to one or more of claims 1 to 7, characterised thereby that the nozzle (18) or the nozzle system (23) is arranged in a separate sector (14).

9. Regenerative heat exchanger according to claim 8, characterised thereby that the sector (14) is constructed as a circumferentially closed chamber and is arranged within the air region (15).

10. Regenerative heat exchanger according to one or more of claims 1 to 9, characterised thereby that a separate, circumferentially closed sector is arranged at the air outlet side (24) of the storage masses (3).

11. Regenerative heat exchanger according to one or more of claims 1 to 10, characterised thereby that the spacing of the nozzle system (23) or the nozzle (18) from the storage masses (3) is settable.

12. Regenerative heat exchanger according to claim 9 or 10, characterised thereby that the sector (14) is arranged to be pivotable.

13. Regenerative heat exchanger according to one or more of claims 1 to 12, characterised thereby that the seals (19a, 19b) associated with the reduction means feed (17) at the air inlet and air outlet side (25 or 24) of the storage masses (3) are offset relative to one another.

14. Regenerative heat exchanger according to one or more of claims 1 to 13, characterised by a guide channel (27) arranged at the air outlet side (24) of the storage masses (3) and leading from the air region (15) to the gas region (21).

## Revendications

1. Dispositif pour un échangeur de chaleur à régénération circulaire (1) pour la diminution de la teneur en NOₓ dans des gaz résiduaires contenant des substances nuisibles, se trouvant dans l'échangeur de chaleur avec un autre agent (de l'air), par addition de NH₃, avec des masses d'accumulation (3) fixes ou rotatives, constituées au moins partiellement par une matière catalytique, auxquelles on a adjoint des capots fixes ou rotatifs (5, 6) et qui présentent des zones pour l'air et les gaz (15, 21) étanches l'une par rapport à l'autre, caractérisé en ce que l'agent de réduction NH₃ est alimenté dans le catalyseur du côté du gaz pur et en ce que l'alimentation en agent de réduction (17) est constituée par une limite fixe, formée par des éléments de guidage (14, 22) mobiles et/ou pivotants qui s'étendent jusqu'à être à proximité des masses d'accumulation (3), la limite comportant au moins un gicleur (18) ou un système de gicleurs (23) pivotant et réglable.

2. Echangeur de chaleur à régénération selon la revendication 1, caractérisé en ce que les éléments de guidage, exécutés sous forme de tôles de guidage (22), s'étendent jusqu'à être à proximité directe des masses d'accumulation (3).

3. Echangeur de chaleur à régénération selon la revendication 2, caractérisé en ce que le gicleur (18) est exécuté comme un gicleur à fente avec une section d'ouverture analogue au contour du secteur circulaire.

4. Echangeur de chaleur à régénération selon la revendication 2, caractérisé par un système de gicleurs (23) constitué par plusieurs gicleurs ronds ou en éventail individuels.

5. Echangeur de chaleur à régénération selon une quelconque des revendications 1 à 4, caractérisé par des éléments de guidage (14, 22) disposés de telle manière qu'ils sont entourés extérieurement par de l'air (L) exempt d'agent de réduction comme milieu de barrage.

6. Echangeur de chaleur à régénération selon une quelconque des revendications 1 à 5, caractérisé en ce que les éléments de guidage (14, 22) sont disposés à l'extrémité de la phase de refroidissement à régénération.

7. Echangeur de chaleur à régénération selon une quelconque des revendications 1 à 6, caractérisé en ce qu'un gicleur (18) ou un système de gicleurs (23) est chaque fois disposé entre deux éléments de guidage (22).

8. Echangeur de chaleur à régénération selon une quelconque des revendications 1 à 7, caractérisé en ce que le gicleur (18) ou le système de gicleurs (23) est disposé dans un secteur (14) séparé.

9. Echangeur de chaleur à régénération selon la revendication 8, caractérisé en ce que le secteur (14) est exécuté comme une chambre à contours fermés et est disposé dans la zone d'air (15).

10. Echangeur de chaleur à régénération selon une quelconque des revendications 1 à 9, caractérisé en ce qu'on a disposé un secteur séparé à contours fermés du côté de la sortie de l'air (24) des masses d'accumulation (3).

11. Echangeur de chaleur à régénération selon une quelconque des revendications 1 à 10, caractérisé en ce que la distance entre le systèmes de gicleurs (23) ou le gicleur (18) et les masses d'accumulation (3) est réglable.

12. Echangeur de chaleur à régénération selon la revendication 9 ou 10, caractérisé en ce que le secteur (14) est disposé de manière à pouvoir pivoter.

13. Echangeur de chaleur à régénération selon une quelconque des revendications 1 à 12, caractérisé en ce que les garnitures (19a, 19b) disposées au niveau de l'alimentation de l'agent de réduction (17) du côté de l'entrée de l'air et du côté de la sortie de l'air (25 ou 24) des masses d'accumulation (3) sont disposées de manière décalée l'une par rapport à l'autre.

14. Echangeur de chaleur à régénération selon une quelconque des revendications 1 à 13, caractérisé par un chenal de guidage (27) disposé du côté de la sortie de l'air (24) des masses d'accumulation (3), allant de la zone d'air (15) vers la zone de gaz (21).
